# EUROPÄISCHE PATENTSCHRIFT

(11) **EP 1 950 069 B1**
(45) Veröffentlichungstag und Bekanntmachung des Hinweises auf die Patenterteilung: **28.12.2011**
(21) Anmeldenummer: 08000251.2
(22) Anmeldetag: 09.01.2008
(51) Int. Cl.: B60K 1/04, B66F 9/075

(54) **Flurförderzug mit einbaubarem Ladegerät**
Industrial truck with installable charging device
Chariot de manutention doté d'un appareil de chargement pouvant être intégré

(30) Priorität: 24.01.2007 DE 202007001040 U
(43) Veröffentlichungstag der Anmeldung: 30.07.2008
(73) Patentinhaber: Jungheinrich Aktiengesellschaft, 22047 Hamburg (DE)
(72) Erfinder: Knie, Andreas, 22769 Hamburg (DE); Nagel, Markus, 20146 Hamburg (DE); Pätsch, Martin, 20535 Hamburg (DE)
(74) Vertreter: Graalfs, Edo

(56) Entgegenhaltungen:
- EP-A- 0 983 960
- WO-A-03/047060
- DE-A1- 4 212 207
- JP-A- 2000 264 547

## Beschreibung

Die Erfindung bezieht sich auf ein Flurförderzeug mit einbaubarem Ladegerät nach dem Anspruch 1.

Die Batterien von elektromotorisch angetriebenen Flurförderzeugen müssen naturgemäß von Zeit zu Zeit wieder aufgeladen werden. Zu diesem Zweck werden die Batterien ausgebaut und zu einer Ladestation gebracht, während eine frisch geladene Batterie in das Fahrzeug eingebaut wird. Es ist jedoch auch bekannt, eine Batterie im Flurförderzeug aufzuladen mit Hilfe eines geeigneten Ladegeräts, das entweder getrennt vom Flurförderzeug vorgesehen wird, oder in das Flurförderzeug eingebaut ist. Im letzteren Fall weist das Ladegerät ein Netzkabel auf, das im Gehäuse des Flurförderzeugs verstaut ist. Im Ladefall wird es aus dem Gehäuse herausgezogen, damit der Netzstecker in die zur Verfügung stehende Netzsteckdose eingesteckt werden kann. Es ist bekannt, den Netzstecker eines derartigen Ladekabels an der Oberseite des Gehäuses des Flurförderzeugs zu lagern und auf einen geeigneten Vorsprung aufzustecken, der an der Gehäuseoberseite ausgebildet ist. Innerhalb des Gehäuses ist ein Federmotor zum Aufwickeln des Netzkabels vorgesehen.

Aus WO 03/047060 A1 ist bekannt geworden, bei einem Elektrofahrzeug in einer Öffnung des Gehäuses eine Schale aus Kunststoff versenkt einzusetzen, welche den Netzstecker lagert. Im Boden der Schale ist eine Öffnung für den Hindurchtritt des Netzkabels geformt. Dadurch, daß der Netzstecker innerhalb der Schale versenkt angeordnet ist, ist er gegen mechanische Einwirkungen von außen weitgehend geschützt. Auch wird vermieden, daß eine unsachgemäße Zugbelastung auf das Netzkabel erfolgt. Zur Speicherung des Kabels ist unterhalb der Schale ein Speicherkasten angebracht, der einen Aufwickelmechanismus mit Federmotor aufweisen kann.

Der Erfindung liegt die Aufgabe zugrunde, eine Anordnung des Ladekabels bzw. des Netzsteckers für das Ladekabel vorzusehen, bei der eine schonende Handhabung des Ladekabels bei gleichzeitig ausreichendem Schutz für den Netzstecker gegen unbeabsichtigte mechanische Einwirkungen von außen gewährleistet ist.

Diese Aufgabe wird durch die Merkmale des Anspruchs 1 gelöst.

Nach der Erfindung sind Schale und Speicherkasten einteilig geformt. Um einerseits die Einteiligkeit werkzeugtechnisch gut zu lösen, andererseits eine günstige Einbausituation zu schaffen, sieht die Erfindung vor, daß der Speicherkasten über ein Filmscharnier mit der Schale verbunden ist und vor dem Einbau um etwa 90° geschwenkt wird. Für die Spritzgußherstellung kann bei dieser Ausgestaltung weitgehend auf aufwendige Schieber verzichtet werden. Im Einbauzustand wird der Kasten unter die Schale geschwenkt und in dieser Situation vorzugsweise durch Verschraubung mit dem Gehäuse verbunden.

Nach einer weiteren Ausgestaltung der Erfindung ist unterhalb der Bodenöffnung eine Führung angeformt mit einem hohlzylindrischen Durchgang für das Netzkabel. Die Führung sorgt dafür, daß beim Herausziehen des Netzkabels und beim Wiedereinführen das Kabel nicht beschädigt wird und leicht in den Speicherraum hinein oder aus diesem heraus gleiten kann.

Eine Ausführungsform der Erfindung wird nachfolgend anhand von Zeichnungen näher erläutert.
- Figur 1: zeigt schematisch perspektivisch die Anordnung eines Netzsteckers für ein Ladekabel in einem Flurförderzeug.
- Figur 2: zeigt perspektivisch die Anordnung einer Schale für einen Netzstecker mit einem Speicherkasten für das Ladekabel.
- Figur 3: zeigt perspektivisch die Anordnung nach Figur 2 und der gegenüberliegenden Seite.
- Figur 4: zeigt die Seitenansicht einer Schale mit Speicherkasten in der im Spritzguß hergestellten Form.
- Figur 5: zeigt die Darstellung nach Figur 4 in Draufsicht.

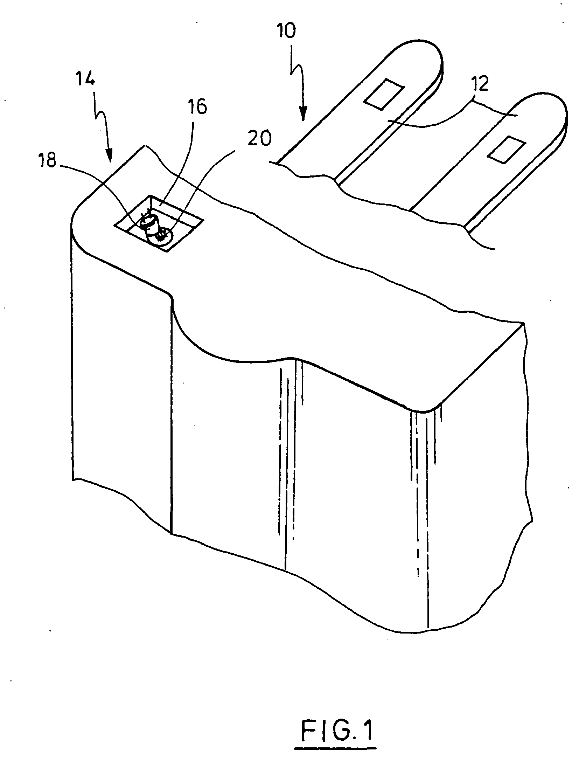

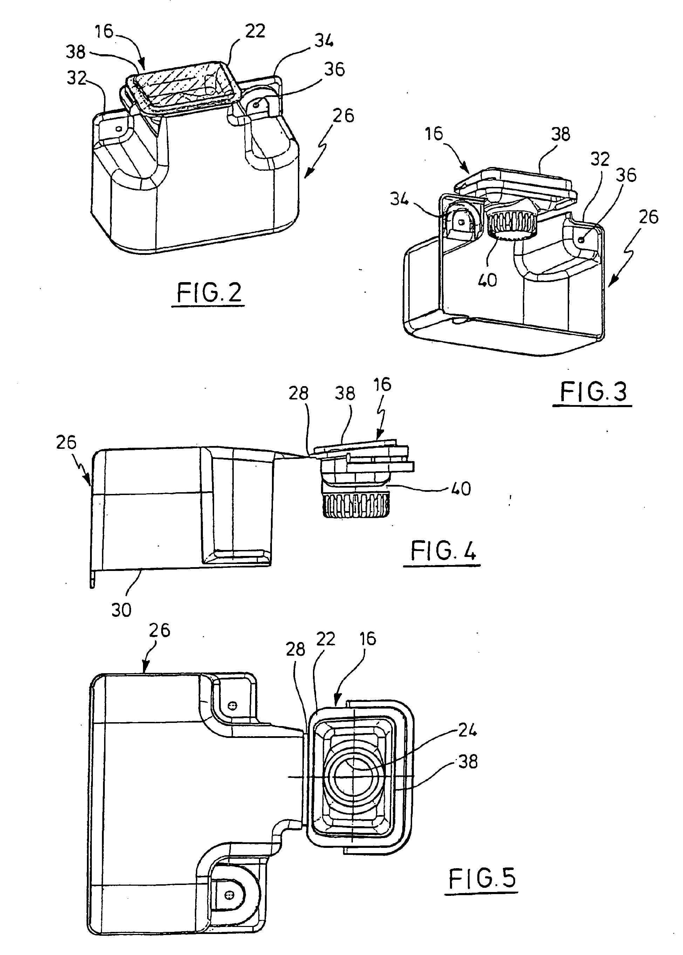

In Figur 1 ist ein Flurförderzeug 10 angedeutet, beispielsweise ein deichselbetätigter Niederhubwagen mit zwei Radarmen 12. Das Gehäuse ist bei 14 angedeutet. Die Deichsel ist fortgelassen. Es ist zu erkennen, daß in die Oberseite des Gehäuses 14 eine Schale 16 in einer Öffnung des Gehäuse eingelassen ist, welche einen Netzstecker 18 eines Ladekabels 20 aufnimmt. Die Schale 16 wird anhand der Figur 2 bis 5 näher erläutert.

Die annähernd rechteckige Schale 16 weist einen nach außen zeigenden umlaufenden Rand 22 auf. Im Boden ist eine kreisförmige Öffnung 24 vorgesehen. Die Schale hat Abmessungen und eine Tiefe, daß der Netzstecker 18 versenkt von der Schale aufgenommen werden kann. Durch die Öffnung 24 erstreckt sich das Netzkabel zu einem Speicherkasten 26, der über ein Filmscharnier 28 an die Schale 16 angebunden ist. Im Spritzgußwerkzeug werden Schale 16 und Speicherkasten 26 in der Anordnung nach den Figuren 4 und 5 erzeugt. Hierbei weist eine offene Seite 30 des Speicherkastens 26 nach unten. Wird er um annähernd 90° gegenüber der Schale 16 verschwenkt, weist die Öffnung 30 zur Seite, wie dies in Figur 3 zu erkennen ist. Zwei ohrähnliche Ansätze 32, 34, weisen ein Befestigungsloch 36 auf zur Befestigung des Speicherkastens 26 zusammen mit der Schale 16 an eine entsprechende Wand oder Halterung innerhalb des Gehäuses 14 des Flurförderzeugs. Hierbei liegt der Rand 22 gegen die Unterseite des Öffnungsrandes. Ein nach oben stehender Rand 38 greift annähernd passend durch die Öffnung des Gehäuses.

Unterhalb der Schale 16 ist eine Führung 40 angeformt, die einen hohlzylindrischen Durchgang aufweist, der zur Öffnung 24 und zum Inneren des Speicherkastens 26 ausgerichtet ist. Der Speicherkasten 26 nimmt das hier nicht gezeigte Netzkabel auf, vorzugsweise aufgewickelt auf einer von einem Federmotor angetriebenen Rolle. Die Führung 40 sorgt dafür, daß das Kabel leicht aus dem Speicherkasten heraus und auch in diesen wieder hinein gleiten kann.

Weist ein Flurförderzeug kein eingebautes Ladegerät auf, mit dem das Netzkabel 20 verbunden ist, kann eine nach unten geschlossene Schale ohne Öffnung 24 und Speicherkasten 26 gleichwohl eingebaut und als Behälter für kleinere Gegenstände verwendet werden.

## Patentansprüche

1. Flurförderzeug mit einbaubarem Ladegerät, das ein Netzkabel (20) mit Netzstecker (18) aufweist, wobei das Netzkabel (20) in einem Speicherraum innerhalb des Gehäuses des Flurförderzeugs speicherbar und über eine Öffnung im Gehäuse mit einem auf der anderen Seite der Öffnung liegenden Netzstecker (18) verbunden ist, wobei in eine Öffnung des Gehäuses (14) eine Schale (16) aus Kunststoff versenkt einsetzbar ist, welche den Netzstecker (18) lagert und in deren Boden die Öffnung (24) für das Netzkabel (20) geformt ist, wobei unterhalb der Schale (16) ein Speicherkasten (26) für das Netzkabel angebracht ist, der vorzugsweise einen Aufwickelmechanismus für das Netzkabel mit Federmotor aufweist, **dadurch gekennzeichnet, dass** die Schale und der Speicherkasten (26) einteilig geformt sind und der Speicherkasten (26) über ein Filmscharnier (28) mit der Schale (16) verbunden ist und vor dem Einbau um etwa 90° gegenüber der Schale (16) verschwenkt ist.

2. Flurförderzeug nach Anspruch 1, **dadurch gekennzeichnet, daß** die Schale (16) so tief ist, daß der Netzstecker (18) im wesentlichen nicht über den Rand (38) der Schale (16) oder die Außenkontur des Gehäuses (14) vorsteht.

3. Flurförderzeug nach Anspruch 1 oder 2, **dadurch gekennzeichnet, daß** die Öffnung zur Aufnahme der Schale (16) in einer nach oben weisenden Fläche des Gehäuses (14) geformt ist.

4. Flurförderzeug nach einem der Ansprüche 1 bis 3, **dadurch gekennzeichnet, daß** unterhalb der Bodenöffnung (24) der Schale (16) eine Führung (40) für das Netzkabel (20) geformt ist, die einen hohlzylindrischen Durchgang aufweist.

5. Flurförderzeug nach einem der Ansprüche 1 bis 4, **dadurch gekennzeichnet, daß** am Speicherkasten (26) geeignete Befestigungsmöglichkeiten zur Befestigung im Gehäuse (14), vorzugsweise mittels Schrauben, Verrastungen, Steckverbindung, Klebung vorgesehen sind.

## Claims

1. Industrial truck with installable charging device which has a mains cable (20) with a mains plug (18), wherein the mains cable (20) is storable in a storage room within the casing of the industrial truck and is connected via an opening in the casing to a mains plug (18) situated on the other side of the opening, wherein a plastic-made cup (16) is insertable into an opening of the casing (14) in a countersunk fashion, the cup accommodates the mains plug (18) and the opening (24) for the mains cable (20) is formed in its bottom, a storage box (26) for the mains cable being attached below the cup (16) and preferably having a wind-up mechanism for the mains cable with a spring motor, **characterised in that** the cup and the storage box (26) are formed in one piece and the storage box (26) is connected to the cup (16) via a film hinge (28) and is pivoted about approximately 90° with respect to the cup (16) before the installation.

2. Industrial truck according to claim 1, **characterised in that** the cup (16) is as deep that the mains plug (18) essentially does not project over the edge (38) of the cup (16) or the outer contour of the casing (14).

3. Industrial truck according to claim 1 or 2, **characterised in that** the opening for the accommodation of the cup (16) is formed in an upside-pointing surface of the casing (14).

4. Industrial truck according to any one of claims I to 3, **characterised in that** a guiding (40) for the mains cable (20) is formed below the bottom opening (24) of the cup (16), which has a hollow cylindrical passageway.

5. Industrial truck according to any one of claims 1 to 4, **characterised in that** suitable fastening means for fastening in the casing (14), preferably by way of screws, catches, plug connection and gluing, are provided on the storage box (26).

## Revendications

1. Chariot de manutention doté d'un appareil de chargement pouvant être intégré, qui a un câble de réseau (20) avec fiche de contact au réseau (18), dans lequel le câble de réseau (20) peut être sauvegarde dans d'un espace de sauvegarde au-dedans du boîtier du chariot de manutention et est relié à travers une ouverture dans le boîtier à une fiche de contact au réseau (18) située dans l'autre coté de l'ouverture, une tasse (16) en matière plastique étant insérable de façon encastrée dans une ouverture du boîtier (14), la tasse logeant la fiche de contact (18), et l'ouverture (24) pour le câble de réseau (20) étant formée dans son fond, une boîte de sauvegarde (26) pour le câble de réseau est montée au-dessous de la tasse (16) et a de préférence un mécanisme d'enroulement pour le câble de réseau avec un moteur à ressort, **caractérisé en ce que** la tasse et la boîte de sauvegarde (26) sont formées en une seule pièce et la boîte de sauvegarde (26) est reliée à la tasse (16) à travers une charnière en feuille (28) et est pivotée pour 90° environ par rapport à la tasse (16) avant l'installation.

2. Chariot de manutention selon la revendication 1, **caractérisé en ce que** la tasse (16) est si profonde que la fiche de contact (18) ne projette pas essentiellement à travers le bord (38) de la tasse (16) ou le contour extérieur du boîtier (14),

3. Chariot de manutention selon la revendication 1 ou 2, **caractérisé en ce que** l'ouverture pour le logement de la tasse (16) est formée dans une surface montrant vers le haut du boîtier (14).

4. Chariot de manutention selon l'une quelconque des revendications 1 à 3, **caractérisé en ce que** un guidage (40), qui a un chemin de passage cylindrique creux, est formé pour le câble de réseau (20) au-dessous de l'ouverture de fond (24) de la tasse (16).

5. Chariot de manutention selon l'une quelconque des revendications 1 à 4, **caractérisé en ce que** des moyens de fixation appropriés pour la fixation dans le boîtier (14), de préférence par des vis, enclenchements, connexion à fichage et collage, sont prévus sur la boîte de sauvegarde (26).
